# EUROPÄISCHE PATENTSCHRIFT

(11) **EP 2 781 772 B1**
(45) Veröffentlichungstag und Bekanntmachung des Hinweises auf die Patenterteilung: **31.05.2017**
(21) Anmeldenummer: 14001014.1
(22) Anmeldetag: 19.03.2014
(51) Int. Cl.: F16C 29/02, F16C 32/06, B23K 26/00, F16C 33/28, F16C 43/02

(54) **Gasdrucklagerelement u. Verfahren zur Herstellung eines Gasdrucklagerelements sowie Gasdrucklager mit einem solchen Gasdrucklagerelement**
Gas pressure bearing element and method for producing a gas pressure bearing element and gas pressure bearing with such a gas pressure bearing element
Élément de palier pneumatique et procédé de fabrication d'un élément de palier pneumatique ainsi que palier pneumatique doté d'un tel élément de palier pneumatique

(30) Priorität: 21.03.2013 DE 102013102924
(43) Veröffentlichungstag der Anmeldung: 24.09.2014
(73) Patentinhaber: AeroLas GmbH Aerostatische Lager · Lasertechnik, 82006 Unterhaching (DE)
(72) Erfinder: Ebi, Harald, 81739 München (DE); Muth, Michael, 81737 München (DE)
(74) Vertreter: Schlimme, Wolfram

(56) Entgegenhaltungen:
- EP-A1- 1 841 975
- DE-A1- 2 654 644

## Beschreibung

Die vorliegende Erfindung betrifft ein Gasdrucklagerelement nach dem Oberbegriff des Patentanspruchs 1. Sie betrifft weiterhin ein Verfahren zur Herstellung eines solchen Gasdrucklagerelements und ein Gasdrucklager, das mit einem derartigen Gasdrucklagerelement gebildet ist. Derartige Gasdrucklagerelemente werden insbesondere als Luftlager eingesetzt.

Gasdrucklagerelemente weisen eine Lagerfläche auf, in die eine Vielzahl von Gasaustrittsdüsen mündet, durch die Druckgas in einen mit dem Gasdrucklagerelement und einem Gegenlagerelement gebildeten Lagerspalt eintritt. Zur Heranführung des Druckgases an die Gasaustrittsdüsen sind üblicherweise auf der Rückseite des Gasdrucklagerelements Gasverteilungsstrukturen vorgesehen, in die die Gasaustrittsdüsen bildende Bohrungen münden.

Aus der DE 44 36 156 C1 ist ein aerostatisches Lager bekannt, das einen Lagerkörper aufweist, auf dessen von der Lagerfläche abgewandter Rückseite eine Mehrzahl von Nuten vorgesehen ist, in deren Boden jeweils Gasaustrittsdüsen bildende Löcher gebohrt sind, die in die Lagerfläche münden. Der Lagerkörper ist an seiner Rückseite mit einem Deckel verschlossen, der mit einer Zuführöffnung für die Druckluft versehen ist. Eine andere dort beschriebene Variante weist einen Lagerkörper auf, der mit Nuten für die Luftversorgung der Luftlager versehen ist und der an seiner Lagerflächenseite mit einer dünnen Metallfolie versehen ist, in welche Löcher eingebracht sind, die die Gasaustrittsdüsen bilden.

Aus der WO 2006/040073 A1 ist eine Gasdrucklageranordnung für einen rotierenden Körper bekannt, bei welchem der rotierende Körper mit über den Umfang verlaufenden Ausnehmungen versehen ist und an seinem Außenumfang eine Lagerhülse aufweist, die die Ausnehmung verschließt. In der Lagerhülse sind Durchtrittsbohrungen vorgesehen, die einerseits in die Ausnehmung und andererseits in die vom Außenumfang der Lagerhülse gebildete Lagerfläche münden und dort Gasaustrittsdüsen bilden.

Die DE 44 03 340 A1 zeigt und beschreibt ein Verfahren zum Herstellen von Mikrodüsen eines aerostatischen Lagers. Bei diesem Verfahren werden in eine verdichtete Lagerfläche eines porösen Sintermaterials mehrere flächig verteilt angeordnete Löcher mittels eines Laserstrahls eingebracht. Diese Löcher bilden Mikrodüsen eines aerostatischen Lagers. Die Luftversorgung dieser Mikrodüsen erfolgt durch das poröse Sintermaterial, wobei jedoch dort keine definierten Kanäle zur Versorgung der Mikrolöcher ausgebildet sind, sondern die offenporige Eigenschaft des Sintermaterials zur Luftführung zu den Mikrodüsen genutzt wird.

Die DE 100 62 603 A1 zeigt und beschreibt ein aerostatisches Lager mit in der Lagerfläche des einen Lagerkörpers vorgesehenen Luftdüsen. Diese Luftdüsen sind über zumindest eine Zuleitung mit einer Druckluftquelle verbunden. Zur Versorgung dieser Luftdüsen sind im Inneren des Lagerkörpers von Bohrungen gebildete Versorgungskanäle für Druckluft ausgebildet. Das Vorsehen derartiger Versorgungsbohrungen ist nicht nur aufwendig, sondern es erfordert zudem, dass die Bohrungen anschließend im Bereich der Außenfläche des Lagerkörpers wieder verschlossen werden. Der Aufwand, ein solches aerostatisches Lager mit einer Druckluftversorgungsstruktur zu versehen, ist daher nicht unerheblich. Ein Verfahren zur Herstellung eines Gasdrucklagerelements ist z.B. aus EP 1 841 975 B1 bekannt. Bei den Komponenten der bisherigen Luftlager handelt es sich um Präzisionsteile, die hochgenau gefertigt werden müssen und deren Herstellung kostenintensiv ist.

Aufgabe der vorliegenden Erfindung ist es, ein Gasdrucklagerelement sowie ein Verfahren zur Herstellung eines Gasdrucklagerelements und ein Gasdrucklager mit einem solchen Gasdrucklagerelement anzugeben, wobei die Herstellungskosten für das Gasdrucklagerelement geringer sind als im Stand der Technik, ohne dabei die Qualität und Zuverlässigkeit des Gasdrucklagers zu beeinträchtigen.

Die auf das Gasdrucklagerelement gerichtete Aufgabe wird gelöst durch ein Gasdrucklagerelement mit den Merkmalen des Patentanspruchs 1.

Ein Gasdrucklager, das ein Gehäuse aufweist, welches einen Gehäusekörper mit in einer seiner Oberflächen ausgebildeten Ausnehmungen aufweist, wobei der Gehäusekörper an seiner offenen Seite mit einem Deckel verschlossen ist, zeichnet sich erfindungsgemäß dadurch aus, dass die Ausnehmungen von rippenartigen Zwischenwänden und/oder anderen inselartigen Erhebungen begrenzt sind und erste Zwischenräume zwischen den Zwischenwänden und/oder den inselartigen Erhebungen bestimmen; dass der Deckel zumindest abschnittsweise von einer mit einer offenporigen Verstärkungsmatte versehenen, ausgehärteten Vergussmasse gebildet ist; dass die Vergussmasse eine nach dem Aushärten bearbeitete ebene Oberfläche aufweist, die eine Lagerfläche des Gasdrucklagers bildet, und dass die Lagerfläche eine Mehrzahl von Gasaustrittsdüsen aufweist, die von den Deckel durchdringenden Mikrolöchern gebildet sind, wobei die Mikrolöcher an Orten vorgesehen sind, unter denen die ersten Zwischenräume unter dem Deckel gelegen sind, die Kanäle einer Druckgasversorgung für die Gasaustrittsdüsen bilden.

Dieser erfindungsgemäße Aufbau des Gasdrucklagerelements und insbesondere von dessen Deckel erlaubt es, zunächst den mit den Ausnehmungen und Zwischenräumen versehenen Gehäusekörper herzustellen. Die Ausnehmungen und Zwischenräume, die später ein Druckgasversorgungssystem für die Gasaustrittsdüsen bilden, werden beispielsweise durch Fräsen oder durch Druckguss oder im Falle von einem aus Kunststoff bestehenden Gehäusekörper durch Spritzguss gefertigt. Auf diesen Gehäusekörper wird dann der Deckel aufgebracht, der oberflächenbearbeitet und mit den Bohrungen versehen wird. Ein solches Gasdrucklagerelement ist schnell und kostengünstig auch in großen Stückzahlen herstellbar und steht in seiner Zuverlässigkeit den herkömmlichen, vollständig aus Metall gebildeten Gasdrucklagerelementen um nichts nach.

In einer vorteilhaften Weiterbildung der Erfindung weist der Gehäusekörper eine Umfangswand auf und zwischen der Umfangswand und den rippenartigen Zwischenwänden sowie den anderen inselartigen Erhebungen sind zweite Zwischenräume gebildet, die einen Umfangskanal bilden.

Vorzugsweise ist die Verstärkungsmatte ein textiles Flächengebilde, beispielsweise ein Vlies, ein Gewebe oder ein Gewirk. Die Verstärkungsmatte kann beispielsweise auch aus Glasfaser oder Kohlefaser bestehen. Auch der Gehäusekörper kann aus einem Verbundwerkstoff, beispielsweise Kohlefaserverbundwerkstoff, bestehen.

Der auf das Verfahren gerichtete Teil der Aufgabe wird gelöst durch das Verfahren zur Herstellung eines Gasdrucklagerelements mit den Merkmalen des Patentanspruchs 4 und zwar durch die folgenden Schritte:
a) Bereitstellen eines mit Ausnehmungen und vorzugsweise mit einer Umfangswand versehenen Gehäusekörpers, wobei die Ausnehmungen von rippenartigen Zwischenwänden und/oder anderen inselartigen Erhebungen begrenzt sind und erste Zwischenräume bestimmen und wobei zwischen den rippenartigen Zwischenwänden und/oder den anderen inselartigen Erhebungen sowie der vorzugsweise vorgesehenen Umfangswand zweite Zwischenräume gebildet sind, die einen Umfangskanal bestimmen;
b) Anbringen eines Deckels auf dem Gehäusekörper auf der mit den Ausnehmungen versehenen Seite des Gehäusekörpers;
c) Bohren von Gasaustrittsdüsen bildenden Mikrolöchern durch den Deckel an Orten, an denen die ersten Zwischenräume unter dem Deckel gelegen sind.

Dieser Deckel kann vollständig aus Kunststoff oder aus einem Faserverbundwerkstoff (beispielsweise Glasfaserverbundmaterial oder Kohlefaserverbundmaterial) bestehen und als vorgefertigtes Deckelteil auf dem Gehäusekörper angebracht werden, in den dann nach dem Anbringen die Mikrolöcher entsprechend dem Merkmal c) gebohrt werden.

Alternativ kann der Deckel auch direkt auf den Gehäusekörper auflaminiert werden, wie dies im Patentanspruch 4 angegeben ist. Dazu wird der Schritt b) des Anbringens des Deckels in folgenden Teilschritten ausgeführt:
b1) Aufbringen von Haftmittel auf die Stirnflächen der Zwischenwände und der inselartigen Erhebungen sowie gegebenenfalls auf die Stirnfläche der Umfangswand;
b2) Positionieren der offenporigen Verstärkungsmatte auf der jeweiligen Stirnfläche der Zwischenwände sowie der inselartigen Erhebungen und gegebenenfalls auf der Stirnfläche der Umfangswand und Fixieren der Verstärkungsmatte auf den Zwischenwänden und auf den inselartigen Erhebungen sowie gegebenenfalls auf der Umfangswand mittels des Haftmittels;
b3) Aufbringen der Vergussmasse auf die offenporige Verstärkungsmatte, wobei die Viskosität der Vergussmasse, deren Aushärtezeit, die Offenporigkeit der Verstärkungsmatte und die Dicke der Verstärkungsmatte so aufeinander abgestimmt sind, dass die Vergussmasse die Verstärkungsmatte tränkt aber nicht durch sie hindurch in die Zwischenräume fließt;
b4) Aushärten der Vergussmasse und
b5) Bearbeiten der äußeren Oberfläche der den Deckel bildenden Einheit aus Vergussmasse und Verstärkungsmatte, vorzugsweise Fräsen, Schleifen und Polieren der Oberfläche, um eine ebene und glatte Lagerfläche für das Gasdrucklager zu erhalten.

Dieses Herstellungsverfahren ist, wie bereits im Hinblick auf das erfindungsgemäße Gasdrucklagerelement angegeben worden ist, schnell und kostengünstig in großen Stückzahlen durchführbar und gestattet zudem eine individuelle Formgestaltung des Gasdrucklagerelements. Die offenporige Verstärkungsmatte bildet dabei eine Verstärkungsstruktur, auf die die Vergussmasse aufgegossen und verteilt wird. Die Offenporigkeit der Verstärkungsmatte, das heißt die Größe und Anzahl der in der Oberfläche und in der Dickenstruktur der Verstärkungsmatte vorgesehenen Öffnungen und Hohlräume, sowie die an die Offenporigkeit der Verstärkungsmatte angepasste Viskosität der Vergussmasse sorgen dafür, dass die auf der Verstärkungsmatte verteilte Vergussmasse zwar in die Öffnungen und Hohlräume der Verstärkungsmatte eindringt, aber nicht durch diese hindurch in die Ausnehmungen des Gehäusekörpers, also in die dort vorgesehenen Hohlräume oder Zwischenräume, hineinfließt und diese verschließt. Nach dem Aushärten der Vergussmasse wird die Außenfläche des Deckels mit herkömmlichen Werkzeugen oberflächenbearbeitet, beispielsweise gefräst, geschliffen und poliert, so dass eine glatte Lagerfläche gebildet wird. In diese Lagerfläche werden dann die Mikrolöcher eingebracht, die den Deckel durchdringen und einerseits in die Lagerfläche und andererseits in die unter dem Deckel befindlichen Hohlräume und Zwischenräume des Gehäusekörpers, also in die Kanäle der Druckgasversorgung, münden.

Vorzugsweise werden im Schritt c) zusätzlich Gasaustrittsdüsen bildende Mikrolöcher in den Deckel an Orten gebohrt, an denen der der Umfangswand benachbarte Umfangskanal unter dem Deckel gelegen ist. Dadurch sind die Gasaustrittsdüsen nicht nur in den ersten Zwischenräumen zwischen den rippenartigen Zwischenwänden und den anderen inselartigen Erhebungen vorgesehen, sondern darüber hinaus auch entlang des Umfangs, so dass sich durch das aus den Gasaustrittsdüsen austretende Druckgas Lagerstützkräfte auch entlang des Umfangs des Gasdrucklagerelements ausbilden können.

Besonders vorteilhaft ist es, wenn das Bohren der die Gasaustrittsdüsen bildenden Mikrolöcher mittels eines hochenergetischen Strahls, vorzugsweise mittels eines Laserstrahls, erfolgt. Diese Technik des Bohrens von Mikrolöchern gestattet es, Gasaustrittsdüsen mit einem äußerst geringen Durchmesser zu bohren, was wiederum zu einem niedrigen Gasverbrauch bei trotzdem hohen Lagerstützkräften und einer großen Lagersteifigkeit führt.

Vorzugsweise wird als Verstärkungsmatte ein textiles Flächengebilde, beispielsweise ein Vlies, ein Gewebe oder ein Gewirk verwendet.

Als Vergussmasse wird vorzugsweise ein Kunstharz, vorzugsweise ein Epoxidharz, verwendet.

Wird als Haftmittel ein Kunstharz verwendet, das dem Kunstharz der Vergussmasse entspricht oder das mit diesem eine nach dem Aushärten feste, monolithische, mechanische Verbindung eingeht, so entsteht eine in sich steife und fest mit dem Gehäusekörper verbundene Deckelplatte.

Mit dem erfindungsgemäßen Gasdrucklagerelement wird zudem ein Gasdrucklager geschaffen, welches zumindest ein stationäres Lagerelement und zumindest ein rotatorisch bewegtes oder ein translatorisch bewegtes Lagerelement aufweist, wobei entweder das stationäre Lagerelement oder das bewegte Lagerelement von einem erfindungsgemäßen Gasdrucklagerelement gebildet ist. Ein solches Gasdrucklager ist nicht nur kostengünstig, sondern auch zuverlässig und kann, wenn auch der Gehäusekörper nicht aus Metall, sondern aus einem Kunststoff, beispielsweise einem faserverstärkten Kunststoff wie zum Beispiel Kohlefaserverbundwerkstoff, gebildet ist, äußerst leicht ausgebildet sein.

Das Gasdrucklager und folglich auch das Gasdrucklagerelement kann eben ausgebildet sein und zur translatorischen oder rotatorischen Bewegung in der Ebene der Lagerfläche eingerichtet sein, es kann aber auch gekrümmt ausgebildet sein und beispielsweise für eine Schwenk- oder Rotationsbewegung entlang einer als Umfangsfläche ausgebildeten Lagerfläche eingerichtet sein.

Die Erfindung wird nachfolgend anhand eines Beispiels unter Bezugnahme auf die Zeichnung näher erläutert; in dieser zeigt:
- **Fig. 1**: einen Querschnitt durch ein Gasdrucklager mit einem Gasdrucklagerelement nach der Erfindung in der Ebene I in Fig. 2;
- **Fig. 2**: eine teilweise geschnittene perspektivische Darstellung eines erfindungsgemäßen Gasdrucklagerelements.

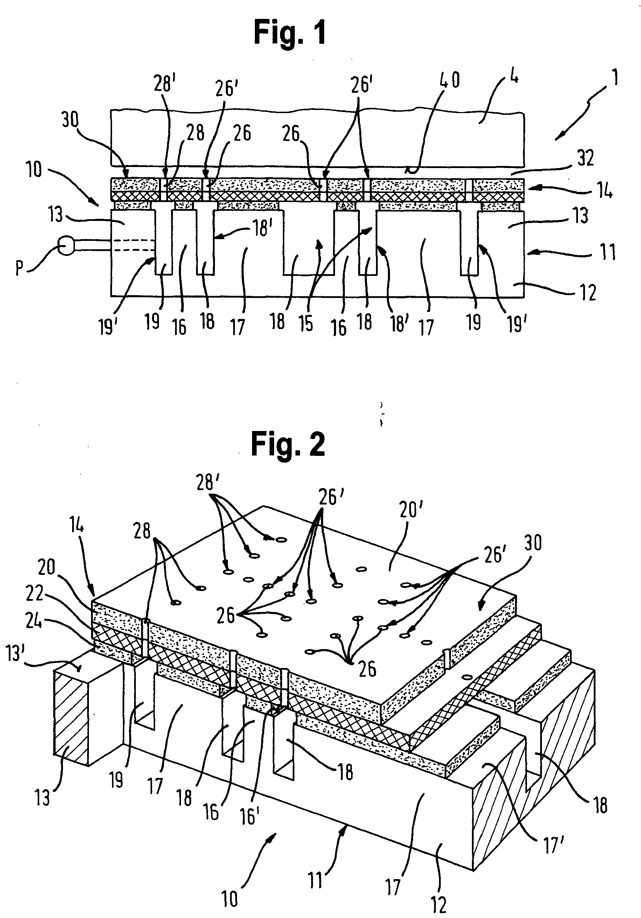

Fig. 1 zeigt ein Gasdrucklager 1 mit einem erfindungsgemäß ausgebildeten Gasdrucklagerelement 10. Das Gasdrucklagerelement 10 weist ein Gehäuse 11 auf, das einen mit Ausnehmungen 15 versehenen Gehäusekörper 12 mit einer Umfangswand 13 sowie einen Deckel 14 aufweist. Die Umfangswand 13 des Gehäusekörpers 12 umgrenzt den mit den Ausnehmungen versehenen Bereich, der von dem mit dem Gehäusekörper 12 fest verbundenen Deckel 14 abgedeckt ist. Die Ausnehmungen 15 sind von rippenartigen Zwischenwänden 16 und inselartigen Erhebungen 17 begrenzt und bilden erste Zwischenräume 18 zwischen den Zwischenwänden 16 und den inselartigen Erhebungen 17 aus.

Fig. 2 zeigt eine teilweise geschnittene perspektivische Darstellung des erfindungsgemäßen Gasdrucklagerelements 10. Der Deckel 14 besteht entweder vollständig oder in Teilen aus einer mit einer Vergussmasse 20 getränkten offenporigen Verstärkungsmatte 22, die mittels eines Haftmittels 24 auf der Stirnfläche 13' der Umfangswand 13, auf der Stirnfläche 16' der Zwischenwände 16 und der freien Stirnfläche 17' der inselartigen Erhebungen 17 angebracht ist. In den Deckel sind eine Vielzahl von Mikrolöchern 26 derart gebohrt, dass sie den Deckel 14 an Orten durchdringen, unter denen die ersten Zwischenräume 18 gelegen sind. Diese ersten Zwischenräume 18 bilden Kanäle 18' für die Druckgasversorgung.

Des Weiteren sind im Deckel Mikrolöcher 28 an Orten vorgesehen, unter denen ein entlang der Umfangswand 13 verlaufende zweite Zwischenräume 19 zwischen der Umfangswand 13 sowie einer benachbarten Zwischenwand 16 oder einer benachbarten inselartigen Erhebung 17 gelegen sind und die einen Umfangskanal 19' ausbilden.

Die ersten und zweiten Zwischenräume 18, 19 bilden Kanäle 18', 19' eines im Inneren des Gasdrucklagerelements gelegenen Verteilersystems für das Druckgas und stehen dazu untereinander in Fluidverbindung. Über einen nach außen aus dem Gasdrucklagerelement herausgeführten Druckgasanschluss P wird das System der Kanäle 18', 19' von einer (nicht gezeigten) Druckgasquelle mit Druckgas, vorzugsweise mit Druckluft, versorgt.

Die als Mikrolöcher ausgebildeten Bohrungen 26, 28, die den Deckel 14 durchdringen, bilden an ihrer Mündung in die als Lagerfläche 21 ausgebildete, vom Gehäusekörper 12 abgewandten Oberfläche des Deckels 14 Gasaustrittsdüsen 26', 28'.

Der Aufbau des in Kompositbauweise nach dem Verfahren der vorliegenden Erfindung gefertigten Deckels 14 wird nachstehend beschrieben.

Der Deckel 14 weist eine offenporige Verstärkungsmatte 22 auf, die zunächst mittels eines Haftmittels 24, beispielsweise eines Kunstharzes, mit der jeweiligen in Fig. 2 nach oben weisenden Stirnfläche 13', 16', 17' der Umfangswand 13 sowie der Zwischenwände 16 und der inselartigen Erhebungen 17 großflächig verklebt wird. Nachdem die offenporige Verstärkungsmatte 22 mittels des Haftmittels 24 verklebt und dadurch fixiert worden ist und bevor das Haftmittel 24 ausgehärtet ist, wird auf die Verstärkungsmatte 22 eine Vergussmasse 20 aufgebracht, die ebenfalls aus einem Kunstharz besteht, das vorzugsweise dem Kunstharz des Haftmittels 24 entspricht oder das mit diesem eine nach dem Aushärten feste Verbindung eingeht. Im Idealfall wird sowohl für das Haftmittel 24 als auch für die Vergussmasse 20 dasselbe Kunstharz verwendet.

Die auf die offenporige Verstärkungsmatte 22 aufgebrachte Vergussmasse 20 dringt in die offenen Poren und Hohlräume der Verstärkungsmatte 22 ein, ohne jedoch durch diese hindurchzufließen. Die in die Verstärkungsmatte 22 eindringende Vergussmasse 20 verbindet sich im Inneren der Verstärkungsmatte 22 mit dem darin von unten eingedrungenen Haftmittel 24, da beide aus demselben oder einem sich gut damit verbindenden Kunstharz bestehen. Die Vergussmasse 20 und das Haftmittel 24 gehen somit nach dem Aushärten eine monolithische Verbindung innerhalb und außerhalb der offenporigen Verstärkungsmatte 22 ein. Von der Vergussmasse 20 wird soviel auf die Verstärkungsmatte 22 aufgebracht, dass die Verstärkungsmatte 22 nicht nur von der Vergussmasse 20 vollständig überdeckt ist, sondern dass auch ein Überstand der Vergussmasse 20 verbleibt. Die sich nach dem Aushärten der Vergussmasse 20 ergebende unebene äußere Oberfläche der Vergussmasse 20 wird anschließend durch Fräsen, Schleifen und Polieren so bearbeitet, dass die bearbeitete Oberfläche 20' eben und gleichmäßig glatt ist. Diese bearbeitete Oberfläche 20' bildet dann die Lagerfläche 30 des Gasdrucklagerelements 10.

Nach diesem mechanischen Bearbeitungsschritt der Oberfläche 20' werden mittels eines hochenergetischen Strahls, beispielsweise eines Laserstrahls, Mikrolöcher 26, 28 in die den Deckel 14 bildende Einheit aus Vergussmasse 20 und Verstärkungsmatte 22 sowie Haftmittel 24 an jenen Orten des Deckels 14 gebohrt, die über den Kanälen 18' liegen. Diese Mikrolöcher 26 durchdringen den Deckel 14 und münden so einerseits in den jeweiligen Kanal 18 und andererseits nach außen in die Lagerfläche 30, wo sie die Gasaustrittsdüsen 26' bilden. Die Durchbohrung des Deckels 14 erfolgt außerdem an den Orten, über dem entlang der Umfangswand 13 verlaufenden Umfangskanal 19 unter Ausbildung von Mikrolöchern 28.

Die Mikrolöcher 26, 28 bilden an ihrer Mündung in die Lagerfläche 30 Gasaustrittsdüsen 26', 28' für ein Druckgas, beispielsweise Druckluft, aus, das beziehungsweise die von einer (nicht gezeigten) Druckgasversorgungseinrichtung über eine ebenfalls nicht gezeigte Druckgasleitung und den Druckgasanschluss P in das Druckgas-Verteilersystem der Kanäle 18', 19' im Inneren des Gehäuses 11 eingeleitet wird. Das Druckgas tritt durch die Mikrolöcher 26, 28 durch den Deckel 14 hindurch, an den Gasaustrittsdüsen 26', 28' aus und in den zwischen der Lagerfläche 30 des Gasdrucklagerelements 10 und einer dieser gegenübergelegenen Lagerfläche 40 eines Gegenlagerelements 4 gebildeten Lagerspalt 32 ein (Fig. 1). Das Druckgas bildet im Lagerspalt 32 ein Gaspolster für die Lagerung des Gegenlagerelements 4 auf dem Gasdrucklagerelement 10. Selbstverständlich ist es möglich, anstelle von Druckluft andere geeignete unter Druck stehende Gase für die Lagerung zu verwenden.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Gasdrucklagerelement (10) mit einem Gehäuse (11), das einen Gehäusekörper (12) mit in einer seiner Oberflächen ausgebildeten Ausnehmungen (15) aufweist, wobei der Gehäusekörper (12) an seiner offenen Seite mit einem Deckel (14) verschlossen ist;
wobei
- die Ausnehmungen (15) von rippenartigen Zwischenwänden (16) und/oder anderen inselartigen Erhebungen (17) begrenzt sind und erste Zwischenräume (18) zwischen den Zwischenwänden (16) und/oder den inselartigen Erhebungen (17) bestimmen und
- eine Lagerfläche (30) eine Mehrzahl von Gasaustrittsdüsen (26') aufweist, die von den Deckel (14) durchdringenden Mikrolöchern (26) gebildet sind, wobei die Mikrolöcher (26) an Orten vorgesehen sind, unter denen die ersten Zwischenräume (18) unter dem Deckel (14) gelegen sind, die Kanäle (18') einer Druckgasversorgung für die Gasaustrittsdüsen (26') bilden,
**dadurch gekennzeichnet,**
- **dass** der Deckel (14) zumindest abschnittsweise von einer mit einer offenporigen Verstärkungsmatte (22) versehenen, ausgehärteten Vergussmasse (20) gebildet ist und
- **dass** die Vergussmasse (20) eine nach dem Aushärten bearbeitete ebene Oberfläche (20') aufweist, die die Lagerfläche (30) des Gasdrucklagers (1) bildet.

2. Gasdrucklagerelement nach Anspruch 1,
**dadurch gekennzeichnet,**
**dass** der Gehäusekörper (12) eine Umfangswand (13) aufweist und dass zwischen der Umfangswand (13) und den rippenartigen Zwischenwänden (16) sowie den anderen inselartigen Erhebungen (17) zweite Zwischenräume (19) gebildet sind, die einen Umfangskanal (19') bilden.

3. Gasdrucklagerelement nach Anspruch 1 oder 2,
**dadurch gekennzeichnet,**
**dass** die Verstärkungsmatte (22) ein textiles Flächengebilde, vorzugsweise ein Vlies, ein Gewebe oder ein Gewirk, ist.

4. Verfahren zur Herstellung eines Gasdrucklagerelements,
**gekennzeichnet durch** die folgenden Schritte:
a) Bereitstellen eines mit Ausnehmungen (15) und mit einer Umfangswand (13) versehenen Gehäusekörpers (12), wobei die Ausnehmungen (15) von rippenartigen Zwischenwänden (16) und/oder anderen inselartigen Erhebungen (17) begrenzt sind und erste Zwischenräume (18) bestimmen, die jeweils einen Kanal (18') bilden und wobei zwischen den rippenartigen Zwischenwänden (16) und/oder den anderen inselartigen Erhebungen (17) sowie der Umfangswand zweite Zwischenräume (19) gebildet sind, die einen Umfangskanal (19') bestimmen;
b) Anbringen eines Deckels (14) auf der mit den Ausnehmungen versehenen Seite des Gehäusekörpers (12);
c) Bohren von Gasaustrittsdüsen (26') bildenden Mikrolöchern (26) **durch** den Deckel (14) an Orten, an denen die ersten Zwischenräume (18) unter dem Deckel (14) gelegen sind.

5. Verfahren nach Anspruch 4,
**dadurch gekennzeichnet,**
**dass** der Schritt b) des Anbringens des Deckels (14) in folgenden Teilschritten ausgeführt wird:
b1) Aufbringen von Haftmittel (24) auf die Stirnflächen (16', 17') der Zwischenwände (16) und der inselartigen Erhebungen (17) sowie gegebenenfalls auf die Stirnfläche (13') der Umfangswand (13);
b2) Positionieren der offenporigen Verstärkungsmatte (22) auf der jeweiligen Stirnfläche (16', 17') der Zwischenwände (16) sowie der inselartigen Erhebungen (17) und auf der Stirnfläche (13') der Umfangswand (13) und Fixieren der Verstärkungsmatte (22) auf den Zwischenwänden (16) und auf den inselartigen Erhebungen (17) sowie auf der Umfangswand (13) mittels des Haftmittels (24);
b3) Aufbringen der Vergussmasse (20) auf die offenporige Verstärkungsmatte (22), wobei die Viskosität der Vergussmasse (20), deren Aushärtezeit, die Offenporigkeit der Verstärkungsmatte (22) und die Dicke der Verstärkungsmatte (22) so aufeinander abgestimmt sind, dass die Vergussmasse (20) die Verstärkungsmatte (22) tränkt aber nicht durch sie hindurch in die Zwischenräume (18, 19) fließt;
b4) Aushärten der Vergussmasse (20) und
b5) Bearbeiten der äußeren Oberfläche der den Deckel (14) bildenden Einheit aus Vergussmasse (20) und Verstärkungsmatte (22), vorzugsweise Fräsen, Schleifen und Polieren der Oberfläche, um eine ebene und glatte Lagerfläche (30) für das Gasdrucklager (1) zu erhalten.

6. Verfahren nach Anspruch 4 oder 5,
**dadurch gekennzeichnet,**
**dass** im Schritt c) zusätzlich Gasaustrittsdüsen (28') bildende Mikrolöcher (28) in den Deckel (14) an Orten gebohrt werden, an denen der der Umfangswand (13) benachbarte Umfangskanal (19') unter dem Deckel (14) gelegen ist.

7. Verfahren nach einem der Ansprüche 4 bis 6,
**dadurch gekennzeichnet,**
**dass** das Bohren der die Gasaustrittsdüsen (26', 28') bildenden Mikrolöcher (26, 28) mittels eines hochenergetischen Strahls erfolgt.

8. Verfahren nach Anspruch 7,
**dadurch gekennzeichnet,**
**dass** der hochenergetische Strahl ein Laserstrahl ist.

9. Verfahren nach einem der Ansprüche 4 bis 8,
**dadurch gekennzeichnet,**
**dass** als Verstärkungsmatte (22) ein textiles Flächengebilde verwendet wird.

10. Verfahren nach Anspruch 9,
**dadurch gekennzeichnet,**
**dass** das als Verstärkungsmatte (22) verwendete textile Flächengebilde ein Vlies, ein Gewebe oder ein Gewirk ist.

11. Verfahren nach einem der Ansprüche 4 bis 10,
**dadurch gekennzeichnet,**
**dass** als Vergussmasse (20) ein Kunstharz verwendet wird.

12. Verfahren nach Anspruch 11,
**dadurch gekennzeichnet,**
**dass** als Haftmittel (24) ein Kunstharz verwendet wird, das dem Kunstharz der Vergussmasse entspricht oder das mit diesem eine nach dem Aushärten feste mechanische Verbindung eingeht.

13. Verfahren nach Anspruch 12,
**dadurch gekennzeichnet,**
**dass** die feste mechanische Verbindung monolithisch ist.

14. Gasdrucklager mit einem Gasdrucklagerelement nach einem der Ansprüche 1 bis 4, wobei das Gasdrucklager zumindest ein stationäres Lagerelement und zumindest ein rotatorisch bewegtes oder ein translatorisch bewegtes Lagerelement aufweist und wobei entweder das stationäre Lagerelement oder das bewegte Lagerelement von einem Gasdrucklagerelement gemäß Anspruch 1, 2, 3 oder 4 gebildet ist.

15. Gasdrucklager nach Anspruch 14,
**dadurch gekennzeichnet,**
**dass** es als Luftlager ausgebildet ist.

## Claims

1. A gas pressure bearing element (10), comprising a housing (11) including a housing body (12) with recesses (15) configured in one of the surfaces of the housing body, wherein the housing body (12) is closed by a cover (14) at an open side of the housing body,
wherein
- the recesses (15) are defined by rib shaped intermediary walls (16) and/or other island shaped protrusions (17) and define first intermediary spaces (18) between the intermediary walls (16) and/or the island shaped protrusions (17) and
- a bearing surface (30) includes a plurality of gas outlet nozzles (26') which are formed by micro holes (26) penetrating through the cover (14), wherein the micro holes (26) are provided at locations under which the first intermediary spaces (18) are arranged below the cover (14), which first intermediary spaces (18) form channels (18') for a pressurized gas supply for the gas outlet nozzles (26'),
**characterized**
- **in that** the cover (14) is at least formed in sections by a cured encasement compound (20) provided with an open pore reinforcement mat (22) and
- **in that** the encasement compound (20) has a flat surface (20') that is processed after curing and forms the bearing surface (30) of the gas pressure bearing (1).

2. The gas pressure bearing element according to claim 1,
**characterized**
**in that** the housing body (12) includes a circumferential wall (13) and in that second intermediary spaces (19) are formed between the circumferential wall (13) and the rib shaped intermediary walls (16) and the other island shaped protrusions (17), wherein the second intermediary spaces (19) form a circumferential channel (19').

3. The gas pressure bearing element according to claim 1 or 2,
**characterized**
**in that** the reinforcement mat (22) is a flat contexture, advantageously configured as a fleece, a woven material or a knitted material.

4. A method for producing a gas pressure bearing element **characterized by** following the steps:
a) providing a housing body (12) that is provided with recesses (15) and with a circumferential wall (13), wherein the recesses (15) are defined by rib shaped intermediary walls (16) and/or other island shaped protrusions (17) and define first intermediary spaces (18) each of which are forming a channel(18') and wherein second intermediary spaces (19) that define a circumferential channel (19') are formed between the rib shaped intermediary walls (16) and/or the other island shaped protrusions (17) and the circumferential wall;
b) applying a cover (14) on the side of the housing body (12) provided with the recesses;
c) drilling micro holes (26) through the cover (14) at locations where the first intermediary spaces (18) are arranged below the cover (14), wherein the micro holes form gas outlet nozzles (26').

5. The method according to claim 4,
**characterized**
**in that** step b) of applying the cover (14) includes the following partial steps:
b1) applying an adhesive (24) to the faces (16', 17') of the intermediary walls (16) and of the island shaped protrusions (17) and optionally to a face (13') of the circumferential wall (13);
b2) positioning the open pore reinforcement mat (22) on the respective faces (16', 17') of the intermediary walls (16) and of the island shaped protrusions (17) and on the face (13') of the circumferential wall (13) and fixating the reinforcement mat (22) on the intermediary walls (16) and on the island shaped protrusions (17) and on the circumferential wall (13) through the adhesive (24);
b3) applying an encasement compound (20) to the open pore reinforcement mat (22), wherein the viscosity of the encasement compound (20), a curing time of the encasement compound, the porosity of the reinforcement mat (22) and the thickness of the reinforcement mat (22) are matched so that the encasement compound (20) drenches the reinforcement mat (22) but does not flow into the intermediary spaces (18, 19) through the reinforcement mat;
b4) curing the encasement compound (20); and
b5) processing an outer surface of the unity of the encasement compound (20) and the reinforcement mat (22) forming the cover (14), preferably through milling, grinding, and polishing the outer surface of the cover in order to obtain a flat and smooth bearing surface (30) for the gas pressure bearing element (1).

6. The method according to claim 4 or 5,
**characterized**
**in that** step c) additionally includes boring micro holes (28) forming gas outlet nozzles (28') in the cover (14) at locations where the circumferential channel (19') adjacent to the circumferential wall (13) is arranged below the cover (14).

7. The method according to one of the claims 4 through 6,
**characterized**
**in that** boring the micro holes (26, 28) forming the gas outlet nozzles (26', 28') is performed through a high energy beam.

8. The method according to claim 7,
**characterized**
**in that** the high energy beam is a laser beam.

9. The method according to one of the claims 4 through 8,
**characterized**
**in that** a flat contexture is used for the reinforcement mat (22).

10. The method according to claim 9,
**characterized**
**in that** the flat contexture used for the reinforcement mat (22) is a fleece, a woven material or a knitted material.

11. The method according to one of the claims 4 through 10,
**characterized**
**in that** a synthetic resin is used for the encasement compound (20).

12. The method according to claim 11,
**characterized**
**in that** a synthetic resin is used for the adhesive (24) which corresponds to the synthetic resin used for the encasement compound or enters a firm mechanical connection with the encasement compound after curing.

13. The method according to claim 12,
**characterized**
**in that** the firm mechanical connection is monolithic.

14. A gas pressure bearing with a gas pressure bearing element according to one of the claims 1 through 4, wherein the gas pressure bearing includes at least one stationary bearing element and at least one rotating bearing element or at least one bearing element that is moved in a linear manner, and wherein either the at least one stationary bearing element or the at least one rotating bearing element or the at least one bearing element that is moved in a linear manner is formed by a gas pressure bearing element according to claim 1, 2, 3 or 4.

15. The gas pressure bearing according to claim 14,
**characterized**
**in that** the gas pressure bearing is configured as an air bearing.

## Revendications

1. Élément de palier pneumatique (10) comportant un boîtier (11) qui présente un corps de boîtier (12) pourvu d'évidements (15) ménagés dans l'une de ses surfaces, le corps de boîtier (12) étant refermé par un couvercle (14) sur son côté ouvert,
dans lequel
- les évidements (15) sont délimités par des cloisons intermédiaires (16) en forme de nervures et/ou par d'autres bossages (17) formant îlots, et déterminent de premiers interstices (18) entre les cloisons intermédiaires (16) et/ou les bossages (17) formant îlots, et
- une surface de palier (30) comprend une pluralité de buses de sortie de gaz (26') qui sont formées par des micro-perforations (26) traversant le couvercle (14), les micro-perforations (26) étant prévues à des endroits au-dessous desquels les premiers interstices (18) se situent au-dessous du couvercle (14) et qui forment des canaux (18') d'une alimentation en gaz comprimé pour les buses de sortie de gaz (26'),
**caractérisé en ce que**
- le couvercle (14) est formé au moins localement par une masse de scellement (20) pourvue d'un tapis de renforcement (22) à pores ouvertes, et **en ce que**
- la masse de scellement (20) présente une surface plane (20') traitée après le durcissement, qui forme la surface de palier (30) du palier pneumatique (1).

2. Élément de palier pneumatique selon la revendication 1,
**caractérisé en ce que**
le corps de boîtier (12) présente une paroi périphérique (13) et **en ce que** de seconds interstices (19) sont formés entre la paroi périphérique (13) et les cloisons intermédiaires (16) en forme de nervures ainsi que les autres bossages (17) formant îlots, lesdits interstices formant un canal périphérique (19').

3. Élément de palier pneumatique selon la revendication 1 ou 2,
**caractérisé en ce que**
le tapis de renforcement (22) est une structure surfacique textile, de préférence un non-tissé, un tissé ou un tricot.

4. Procédé de réalisation d'un élément de palier pneumatique,
**caractérisé par** les étapes suivantes consistant à :
a) fournir un corps de boîtier (12) pourvu d'évidements (15) et d'une paroi périphérique (13), dans lequel les évidements (15) sont délimités par des cloisons intermédiaires (16) en forme de nervures et/ou par d'autres bossages (17) formant îlots et déterminent de premiers interstices (18) qui forment un canal respectif (18'), et de seconds interstices (19) sont formés entre les cloisons intermédiaires (16) en forme de nervures et/ou les autres bossages (17) formant îlots ainsi que la paroi périphérique, lesdits interstices déterminant un canal périphérique (19') ;
b) monter un couvercle (14) sur le côté du corps de boîtier (12) pourvu des évidements ;
c) percer des micro-perforations (26) formant des buses de sortie de gaz (26') à travers le couvercle (14) à des endroits auxquels les premiers interstices (18) sont situés au-dessous du couvercle (14).

5. Procédé selon la revendication 4,
**caractérisé en ce que**
l'on met en oeuvre l'étape b) du montage du couvercle (14) par les étapes partielles suivantes consistant à :
b1) appliquer des agents adhésifs (24) sur les surfaces frontales (16', 17') des cloisons intermédiaires (16) et des bossages (17) formant îlots ainsi que le cas échéant sur la surface frontale (13') de la paroi périphérique (13) ;
b2) positionner le tapis de renforcement (22) à pores ouvertes sur la surface frontale respective (16', 17') des cloisons intermédiaires (16) ainsi que des bossages (17) formant îlots et sur la surface frontale (13') de la paroi périphérique (13), et fixer le tapis de renforcement (22) sur les cloisons intermédiaires (16) et sur les bossages (17) formant îlots ainsi que sur la paroi périphérique (13) à l'aide du agent adhésif (24) ;
b3) appliquer la masse de scellement (20) sur le tapis de renforcement (22) à pores ouvertes, la viscosité de la masse de scellement (20), sa durée de durcissement, la porosité du tapis de renforcement (22) et l'épaisseur du tapis de renforcement (22) étant adaptées les unes aux autres de telle sorte que la masse de scellement (20) imprègne le tapis de renforcement (22), mais ne s'écoule pas à travers celui-ci jusque dans les interstices (18, 19);
b4) faire durcir la masse de scellement (20), et
b5) traiter la surface extérieure de l'unité formée de la masse de scellement (20) et du tapis de renforcement (22) et formant le couvercle (14), de préférence fraiser, poncer et polir la surface pour obtenir une surface de palier plane et lisse pour le palier pneumatique (1).

6. Procédé selon la revendication 4 ou 5,
**caractérisé en ce que**
dans l'étape c), on perce en supplément des micro-perforations (28) formant des buses de sortie de gaz (28') dans le couvercle (14) à des endroits auxquels le canal périphérique (19') avoisinant la paroi périphérique (13) se situe au-dessous du couvercle (14).

7. Procédé selon l'une des revendications 4 à 6,
**caractérisé en ce que**
le perçage des micro-perforations (26, 28) formant les buses de sortie de gaz (26', 28') s'effectue au moyen d'un faisceau à haute énergie.

8. Procédé selon la revendication 7,
**caractérisé en ce que**
le faisceau à haute énergie est un faisceau laser.

9. Procédé selon l'une des revendications 4 à 8,
**caractérisé en ce que**
on utilise à titre de tapis de renforcement (22) une structure surfacique textile.

10. Procédé selon la revendication 9,
**caractérisé en ce que**
la structure surfacique textile utilisée en tant que tapis de renforcement (22) est un non-tissé, un tissé ou un tricot.

11. Procédé selon l'une des revendications 4 à 10,
**caractérisé en ce que**
on utilise à titre de masse de scellement (20) une résine synthétique.

12. Procédé selon la revendication 11,
**caractérisé en ce que**
on utilise à titre d'agent adhésif (24) une résine synthétique qui correspond à la résine synthétique de la masse de scellement ou qui entre en liaison mécanique ferme avec celle-ci après le durcissement.

13. Procédé selon la revendication 12,
**caractérisé en ce que**
la liaison mécanique ferme est monolithique.

14. Palier pneumatique comportant un élément de palier pneumatique selon l'une des revendications 1 à 4, dans lequel le palier pneumatique comprend au moins un élément de palier stationnaire et au moins un élément de palier déplacé en rotation ou déplacé en translation, et soit l'élément de palier stationnaire soit l'élément de palier déplacé est formé par un élément de palier pneumatique selon la revendication 1, 2, 3 ou 4.

15. Palier pneumatique selon la revendication 14,
**caractérisé en ce que**
il est réalisé sous forme de palier à air.
